# EUROPEAN PATENT APPLICATION

(11) **EP 1 251 061 A1**
(43) Date of publication of application: **23.10.2002**
(21) Application number: 01118431.4
(22) Date of filing: 31.07.2001
(51) Int. Cl.: B62D 25/20

(54) **Floor panel assembly for motor vehicle, having improved strength against side impact**

(30) Priority: 19.04.2001 KR 2001020998
(71) Applicant: KIA MOTORS CORPORATION, Seoul 137-938 (KR)
(72) Inventor: Lee, Ho-Chul, Anyang-shi, Kyonggi-do 430-823 (KR)
(74) Representative: Viering, Jentschura & Partner

(57) **Abstract**

Disclosed is a floor panel assembly which delimits a bottom of a passenger compartment. The floor panel assembly includes a floor panel (10) and a pair of reinforcing members (20). A pair of side sills (40) each of which has a center pillar (42), are respectively positioned at both sides of the floor panel, and a reinforcing tunnel part (12) is integrally formed on a center portion of the floor panel (10) so that it protrudes upward and extends in a lengthwise direction of a vehicle body. The pair of reinforcing members respectively extend from side walls of the reinforcing tunnel part (12) to lower ends of the center pillars (42) of the side sills, across the floor panel. Each reinforcing member has a hollow beam-shaped contour. The reinforcing members are fastened with respect to the center pillars due to the fact that they are welded to front seat brackets by the medium of fastening brackets.

## Description

### BACKGROUND OF THE INVENTION

### Field of the Invention

The present invention relates to a passenger compartment of a motor vehicle, and more particularly, the present invention relates to a floor panel assembly which delimits a bottom of a passenger compartment.

### Description of the Related Art

Generally, when two cars collide with each other or a car runs into a fixture, an occupant or occupants are likely to be damaged by shock transferred through structural sections of the car or cars. Accordingly, it is advantageous that structural sections of a car have high strength to ensure safety of an occupant. In this regard, although efforts and emphases have gone far toward continually improving strength of vehicles, these continue in the present and are expected to continue and grow well into the future.

Among structural sections of a motor vehicle, in the case of a floor panel assembly which delimits a bottom of a passenger compartment, several component elements including a seat and a parking brake assembly are installed on the floor panel assembly. The floor panel assembly has a relatively simple configuration in that it possesses a reinforcing tunnel part which is integrally formed on a flat plate-shaped floor panel in a lengthwise direction of a body of the motor vehicle and a pair of cross members which respectively extend from side walls of the reinforcing tunnel part to side sills in a widthwise direction of the body. The pair of cross members transversely extend between center pillars across the entire floor panel.

The floor panel assembly constructed as mentioned above suffers from defects in that, since the floor panel assembly has the simple configuration, it cannot but exhibit poor strength, particularly against side impact, when compared to other structural sections of the body.

To cope with these defects, attempts for improving strength of a floor panel assembly have been made. As an example, a vehicle dynamic side impact system is disclosed in U.S. Patent No. 5,954,390 assigned to Chrysler Corporation. In this vehicle dynamic side impact system, a cross-car beam which laterally extends across a passenger compartment between center pillars respectively positioned at both sides of a floor panel, functions to improve side impact strength of a floor panel assembly.

However, the vehicle dynamic side impact system still encounters a problem in that, because the cross-car beam extending fully across the floor panel is arranged above a reinforcing tunnel part formed on the floor panel in a lengthwise direction of a vehicle body so as to avoid interference with the reinforcing tunnel part, an entire height of the floor panel assembly is increased, whereby layout of component elements to be installed on the floor panel cannot but be restricted.

### SUMMARY OF THE INVENTION

Accordingly, the present invention has been made in an effort to solve the problems occurring in the related art, and an object of the present invention is to provide a floor panel assembly for a motor vehicle, which has an increased degree of freedom in layout of component elements and improved strength against side impact.

In order to achieve the above object, a floor panel assembly according to the present invention includes a floor panel and a pair of reinforcing members. A pair of side sills each of which has a center pillar, are respectively positioned at both sides of the floor panel, and a reinforcing tunnel part is integrally formed on a center portion of the floor panel so that it protrudes upward and extends in a lengthwise direction of a vehicle body. The pair of reinforcing members respectively extend from side walls of the reinforcing tunnel part to lower ends of the center pillars of the side sills, across the floor panel. Each reinforcing member has a hollow beam-shaped contour. The reinforcing members are fastened with respect to the center pillars due to the fact that they are welded to front seat brackets by the medium of fastening brackets.

### BRIEF DESCRIPTION OF THE DRAWINGS

The above objects, and other features and advantages of the present invention will become more apparent after a reading of the following detailed description when taken in conjunction with the drawings, in which:
FIG. 1 is a perspective view illustrating a floor panel assembly in accordance with an embodiment of the present invention;
FIG. 2 is a cross-sectional view taken along the line II-II of FIG. 1; and
FIG. 3 is an exploded perspective view illustrating in detail a reinforcing member which constitutes a main feature of the present invention.

### DETAILED DESCRIPTION OF PREFERRED EMBODIMENTS

Reference will now be made in greater detail to a preferred embodiment of the invention, an example of which is illustrated in the accompanying drawings. Wherever possible, the same reference numerals will be used throughout the drawings and the description to refer to the same or like parts.

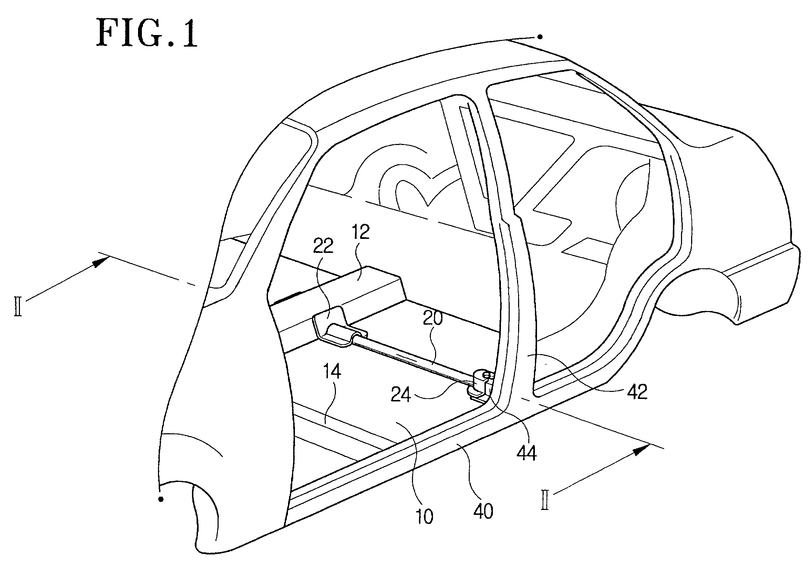

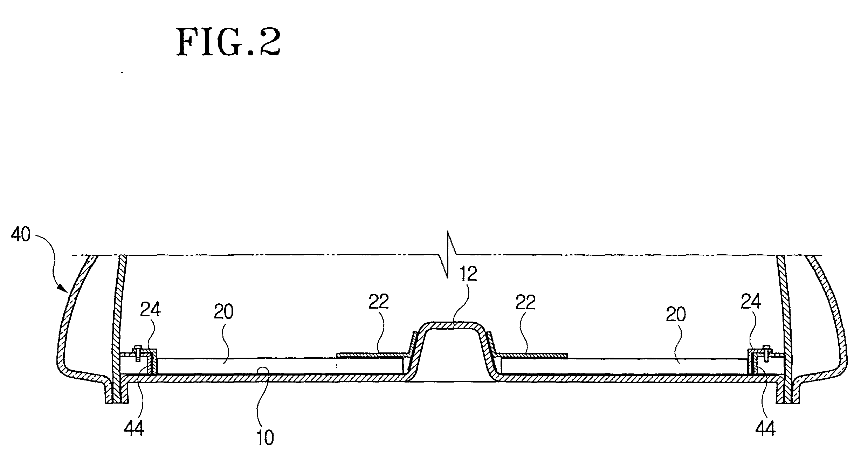

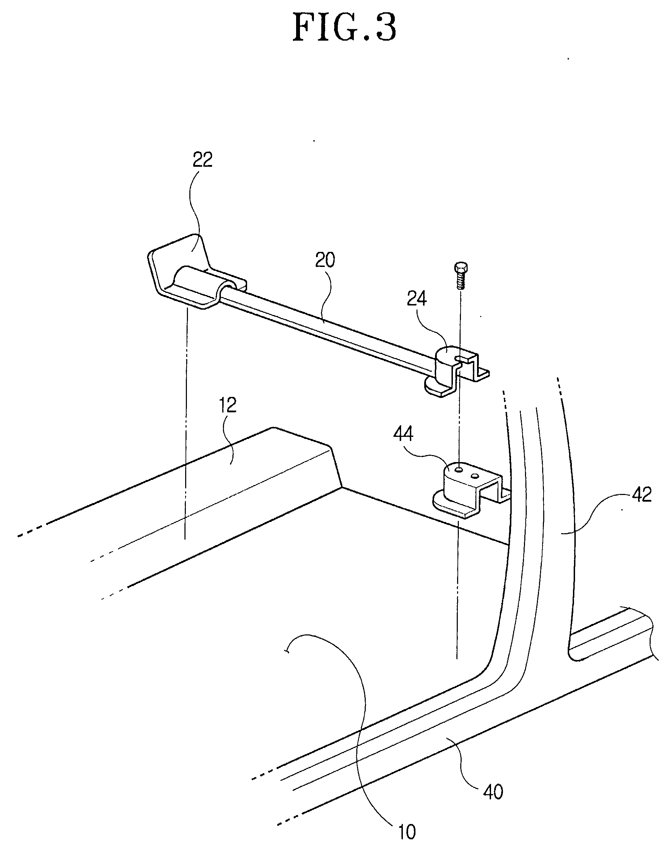

A floor panel assembly in accordance with an embodiment of the present invention is illustrated in FIGs. 1 through 3.

Referring to FIGs. 1 through 3, a floor panel 10 has a reinforcing tunnel part 12 which is formed in a lengthwise direction of a vehicle body. The reinforcing tunnel part 12 is formed due to the fact that a center portion of the floor panel 10 protrudes upward. A pair of side sills 40 each of which has a center pillar 42, are respectively positioned at both sides of the floor panel 10. Doors (not shown) are mounted to the side sills 40.

A pair of reinforcing members 20 are disposed in a manner such that they respectively extend from side walls of the reinforcing tunnel part 12 to lower ends of the center pillars 42 of the side sills 40, transversely across the vehicle body. One end of each reinforcing member 20 is welded with respect to the side wall of the reinforcing tunnel part 12 by the medium of a first fastening bracket 22, and the other end of each reinforcing member 20 is welded with respect to a seat bracket 44 by the medium of a second fastening bracket 24. At this time, the seat bracket 44 is integrally formed with the lower end of the center pillar 42 and is covered by the second fastening bracket 24. Preferably, the reinforcing member 20 has a circular cross-section and a hollow beam-shaped contour.

On the other hand, a pair of cross members 14 are disposed on the floor panel 10 forward of the center pillars 42 so that they extend transversely across the vehicle body.

By the above-described construction of the floor panel assembly according to the present invention, outside shock which is transferred through the center pillars 42 to the floor panel 10 upon side impact, is effectively absorbed by the reinforcing members 20 which respectively connect the lower ends of the center pillars 42 and the side walls of the reinforcing tunnel part 12, whereby the floor panel 10 is not easily deformed by the outside shock.

As described above, in the floor panel assembly according to the present invention, a pair of reinforcing members are disposed in a manner such that they respectively extend from side walls of a reinforcing tunnel part of a floor panel to lower ends of center pillars of side sills. Consequently, since the reinforcing members do not pass through the reinforcing tunnel part so as to avoid interference with the reinforcing tunnel part, it is not necessary to arrange the reinforcing members above the reinforcing tunnel part. As a result of this, the floor panel assembly according to the present invention provides advantages in that strength against side impact is remarkably improved due to the presence of the reinforcing members, and a degree of freedom in layout of component elements such as a seat, and the like, is significantly increased.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A floor panel assembly for a motor vehicle, comprising:
a floor panel having respectively positioned at both sides thereof a pair of side sills each of which has a center pillar, the floor panel further having integrally formed on a center portion thereof a reinforcing tunnel part which protrudes upward and extends in a lengthwise direction of a vehicle body; and
a pair of reinforcing members respectively extending from side walls of the reinforcing tunnel part to lower ends of the center pillars of the side sills, across the floor panel.

2. The floor panel assembly as claimed in claim 1, wherein each reinforcing member has a hollow beam-shaped contour.

3. The floor panel assembly as claimed in claim 1, wherein the reinforcing members are fastened with respect to the center pillars by being welded to front seat brackets by the medium of fastening brackets.
